# EUROPEAN PATENT APPLICATION

(11) **EP 1 657 048 A1**
(43) Date of publication of application: **17.05.2006**
(21) Application number: 05000334.2
(22) Date of filing: 10.01.2005
(51) Int. Cl.: B29C 67/00

(54) **Three-dimensional printing prototyping system**

(30) Priority: 11.11.2004 KR 2004091897
(71) Applicant: KOREA INSTITUTE OF MACHINERY & MATERIALS, Taejon (KR)
(72) Inventor: Kim, Dong Soo, Taejon (KR); Lee, Taik Min, Taejon (KR); Lee, Won Hee, Taejon (KR); Lim, Hyun Eui, Taejon (KR); Hoi, Byung Oh, Taejon (KR)
(74) Representative: Molnia, David

(57) **Abstract**

The present invention relates to a three-dimensional printing prototyping system which includes a prototyping chamber (21) having a prototyping table (23) capable of moving up and down by a predetermined range, a material containing chamber (31) containing a powder material and having a material supply table (33) capable of moving up and down by a predetermined range, and a material supplying means (37) for supplying the powder material contained in the material containing chamber (31) to the prototyping table (23) as much as a sectional thickness corresponding to divided section data of a three-dimensional prototype to be prototyped. The system of the present invention comprises a printing head (40) for injecting a photocuring adhesive material to a region, corresponding to the sectional data, on the powder material supplied to the prototyping table; a curing device (8) for photocuring at least the region on which the adhesive material is injected; and a control computer (7) for controlling the printing head (40) and the curing device (8) such that the adhesive material is injected and cured, respectively, on the region corresponding to the divided section data of the three-dimensional prototype. A period of time required in curing a three-dimensional prototype can be remarkably shortened and the three-dimensional prototype with its superior solidity can be obtained.

## Description

### BACKGROUND OF THE INVENTION

### 1. Field of the Invention

The present invention relates to a three-dimensional printing prototyping system.

### 2. Description of the Related Art

A three-dimensional printing prototyping system is a system for prototyping a three-dimensional prototype by using the ink-jet technique for use in an ink-jet printer.

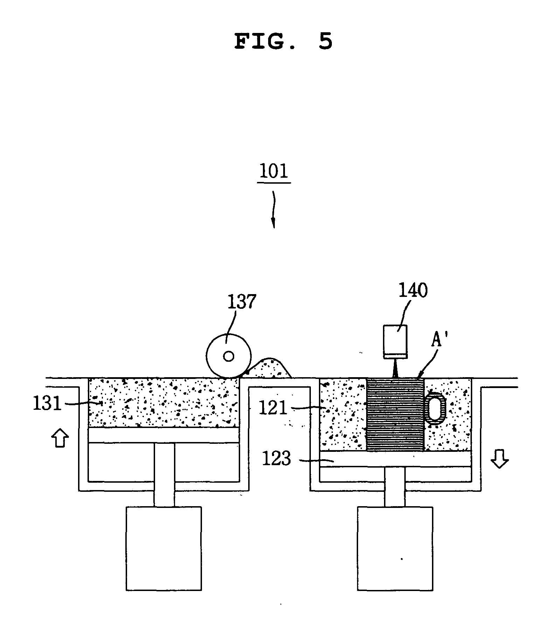

As shown in Fig. 5, a conventional three-dimensional printing prototyping system 101 is configured in such a manner that, when a powder material contained in a material containing chamber 131 is supplied to a prototyping table 123 in a prototyping chamber 121 as much as a predetermined sectional thickness by means of a roller 137 or the like, a printing head 140 injects an adhesive material onto a sectional layer corresponding to a three-dimensional prototype A' to stack a relevant section, thereby finally prototyping the three-dimensional prototype A'.

At this time, a binder is used as an adhesive material injected from the printing head 140 and is preferably a liquid binder material with low viscosity to pass through fine nozzles of the printing head 140 as smoothly as ink without clogging the nozzles.

In such a conventional three-dimensional printing prototyping system, however, the liquid binder with low viscosity, which is an adhesive material injected from the printing head, has a relatively weak adhesive force and a slow curing rate. Therefore, there are problems in a considerably long curing time is required even after the three-dimensional prototype has been completed and that the solidity of the three-dimensional prototype cannot be ensured even after the prototype has been completely cured.

### SUMMARY OF THE INVENTION

Therefore, it is an object of the present invention to provide a three-dimensional printing prototype capable of remarkably shortening a period of time required in curing a three-dimensional prototype and prototyping a solid three-dimensional prototype.

According to an aspect of the present invention for achieving the object of the present invention, there is provided a three-dimensional printing prototyping system which includes a prototyping chamber having a prototyping table capable of moving up and down by a predetermined range, a material containing chamber containing a powder material and having a material supply table capable of moving up and down by a predetermined range, and a material supplying means for supplying the powder material contained in the material containing chamber to the prototyping table as much as a sectional thickness corresponding to divided section data of a three-dimensional prototype to be prototyped. The system of the present invention further comprises a printing head for injecting a photocuring adhesive material to a region, corresponding to the sectional data, on the powder material supplied to the prototyping table; a curing device for photocuring at least the region on which the adhesive material is injected; and a control computer for controlling the printing head and the curing device such that the adhesive material is injected and cured, respectively, on the region corresponding to the divided section data of the three-dimensional prototype.

Preferably, the photocuring adhesive material is a mixture of UV resin and liquid binder with low viscosity.

The control computer may control the powder material to be supplied to the prototyping table as much as a thickness of each section in order of the section data, an operation of the printing head for injecting the adhesive material and an operation of the curing device such that the adhesive material is injected and cured, respectively, on the powder material in a region corresponding to the section data when the powder material corresponding to the relevant section thickness is supplied to the prototyping table, and the prototyping table to be lowered by the thickness of the section when the adhesive material has been completely injected and cured on the relevant section.

Preferably, the curing device is a curing device with a lamp for irradiating ultraviolet rays to a whole or partial area in the prototyping chamber.

### BRIEF DESCRIPTION OF THE DRAWINGS

The above and other objects, features and advantages of the present invention will become apparent from the following description of preferred embodiments given in conjunction with the accompanying drawings, in which:
Fig. 1 is a view schematically illustrating the configuration of a three-dimensional printing prototyping system according to the present invention;
Figs. 2a to 4 show the processes of prototyping a three-dimensional prototype using the system of Fig. 1; and
Fig. 5 is a view schematically illustrating a conventional three-dimensional printing prototyping system.

### DESCRIPTION OF THE PREFERRED EMBODIMENT

Hereinafter, the present invention will be described in detail with reference to the accompanying drawings.

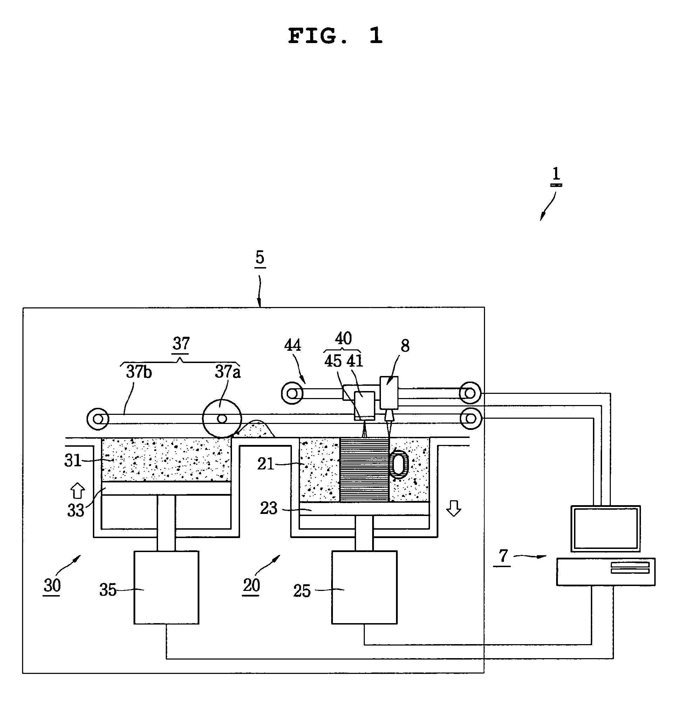

Fig. 1 is a schematic view of a three-dimensional printing prototyping system according to the present invention. As shown in the figure, the three-dimensional printing prototyping system 1 of the present invention includes a prototyping device 5 for prototyping a three-dimensional prototype, and a control computer 7 for controlling the operation of the prototyping device 5 and a curing device 8.

The prototyping device 5 includes a prototyping unit 20 in which a prototype is prototyped, a material supply unit 30 for supplying the prototyping unit 20 with a power material that corresponds to a prototyping material, a printing head 40 for injecting an adhesive material to a sectional region of the three-dimensional prototype made of the power material supplied to the prototyping unit 20, and the curing device 8 for curing a region to which the adhesive material is injected. The prototyping unit 5 is connected to the control computer 7 such that signal and data transmission can be made between them.

The prototyping unit 20 includes a prototyping chamber 21 that defines a prototyping area, a prototyping table 23 that moves up and down within the prototyping chamber 21, and a prototyping table lift 25 for lifting up and down the prototyping table 23. Herein, a lifting range of the prototyping table 23 corresponds to a section thickness of three-dimensional shape data transmitted from the control computer 7 to be described later.

The material supply unit 30 includes a material containing chamber 31 for containing a powder material, a material supply table 33 that moves up and down within the material containing chamber 31, a supply table lift 35 for lifting up and down the material supply table 33, and a powder material supplying means 37 for supplying the powder material contained in the material containing chamber 31 to the prototyping chamber 21.

The powder material contained in the material containing chamber 31 may be ceramics, metal, plastic or any combinations thereof depending on the kind of duplicates to be prototyped. The powder material may include a fiber.

In addition, the lifting range of the material supply table 33 corresponds to a section thickness of the three-dimensional shape data transmitted from the control computer 7 to be described later.

The material supplying means 37 includes a material supply member 37a that moves from an upper face of the material containing chamber 31 to an upper face of the prototyping chamber 21, and a driving member 37b for moving the material supply member 37a.

The material supply member 37a may be configured in the form of a plate, roller or the like, while the driving member 37b may be composed of a guide rail, a motor and/or the like, which are capable of moving the material supply member 37a in a horizontal direction.

In the meantime, the printing head 40 is installed in such a manner that it can be moved above the prototyping table 23 in an X-Y coordinate on a horizontal section of a three-dimensional prototype to be prototyped by means an X-Y driving unit 44.

This printing head 40 includes a cartridge 41 in which an adhesive material is contained, and a printing nozzle unit 45 having a plurality of nozzle holes through which the adhesive material contained in the cartridge 41 is injected to the outside, as shown in Figs. 1 to 4.

The adhesive material contained in the cartridge 41 is a photocuring resin, which is a mixture of a binder and UV resin. At this time, a mixture ratio of the binder and UV resin can vary according to the property and objective of each material used. This ratio is selected so that the adhesive material is not hardened in the cartridge for a long time but can maintain a low-viscosity liquid state enough to pass through the nozzle holes (not shown) of the printing nozzle 45 without clogging the nozzle holes. Furthermore, the mixture ratio of the binder and UV resin may be changed depending on the powder material or other prototyping conditions.

Similarly to the printing head 40, the curing device 8 is also installed in such a manner that it can be moved in an X-Y coordinate on the horizontal section of the three-dimensional prototype. At this time, a horizontal motion of the curing device 8 may be implemented either by an additional X-Y driving unit or by the X-Y driving unit 44 of the printing head 40. The curing device 8 irradiates ultraviolet rays toward a stacked section of the three-dimensional prototype in the prototyping chamber to cure the powder material on a region where the adhesive material is injected.

At this time, the curing device 8 may be implemented as a position-controlling curing device in which an irradiation direction or distance from an ultraviolet lamp can be controlled by the control computer 7.

The control computer 7 controls the prototyping operation of the prototyping device 5 on the basis of the three-dimensional shape data using a program beforehand inputted for operating the prototyping device so as to prototype the three-dimensional prototype.

That is, the control computer 7 stores the three-dimensional shape data, controls the operations of the prototyping table lift 25, the supply table lift 35 and the driving member 37b of the prototyping device 5, and also controls the operations of injecting the adhesive material from the printing head 40, moving the printing head 40 and driving the curing device 8.

Hereinafter, a method for prototyping a three-dimensional prototype using the three-dimensional printing prototyping system 1 of the present invention so configured will be described.

First, the three-dimensional shape data stored in the control computer 7 are either stored as divided section data or divided into section data by the operation of programs such as CAD after the data have been stored.

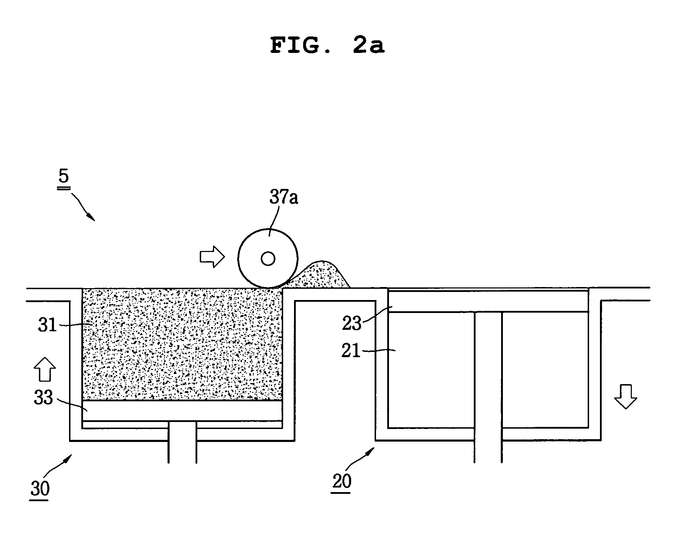

The prototyping device 5 connected to the control computer 7 can prototype a three-dimensional prototype based on the three-dimensional shape data under the control of the control computer 7, as shown in Figs. 2a to 4.

The prototyping operation is as follows. As shown in Fig. 2a, an upper one of the powder materials contained in the material containing chamber 31 is first supplied onto the upper surface of the prototyping table 23 in the prototyping chamber 21 by a predetermined thickness by means of the material supply member 37a that is moved under the control of the control computer 7.

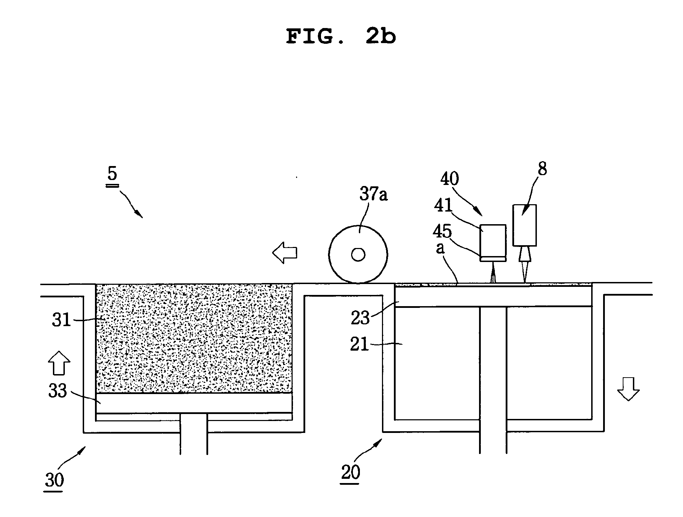

Then, as shown in Fig. 2b, the control computer 7 injects the adhesive material, i.e. a mixture of the binder and UV resin, while moving the printing head 40 in an X-Y direction on a region corresponding to data on a first section a among the section data of the stored three-dimensional shape data.

Thereafter, the control computer 7 operates the curing device 8 to irradiate ultraviolet rays to the powder material on the section region where the adhesive material is injected, thereby rapidly and solidly curing the first section a and forming the first section a.

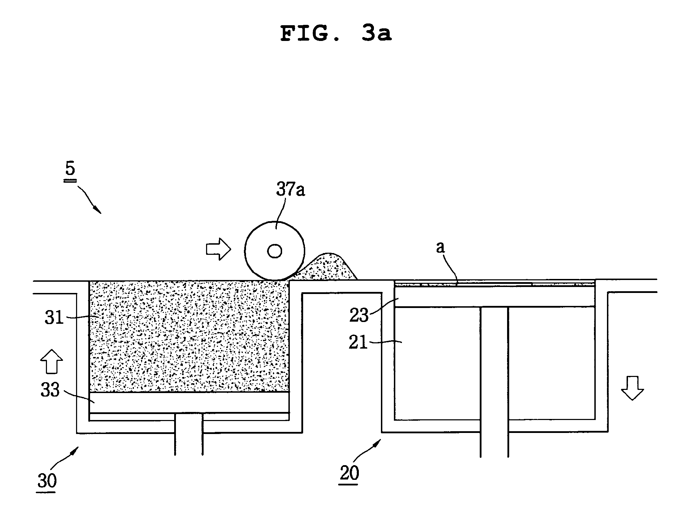

After the first section a has been formed, the control computer 7 operates the prototyping table lift 25 to move down the prototyping table 23 in a Z direction as much as the thickness of a section to be prototyped and also operates the supply table lift 35 to move up the material supply table 33 in the Z direction as much as the thickness of the section to be prototyped, as shown in Fig. 3a.

Further, the control computer 7 moves the material supply member 37a from the material containing chamber 31 to the prototyping chamber 21 to cause the powder material to be supplied onto the upper surface of the first section a of the prototyping table 23 by a predetermined thickness.

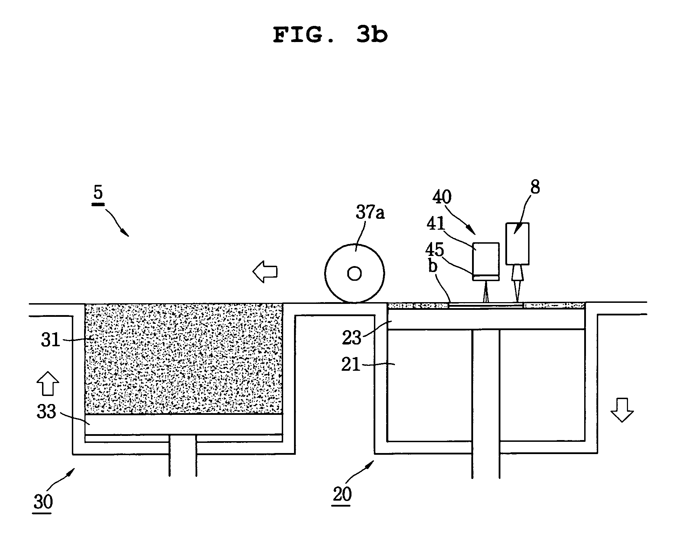

Then, as shown in Fig. 3b, the control computer 7 controls the printing head 40 and the curing device 8 such that they inject the adhesive material and cure a sectional area where the adhesive material is injected, respectively, while moving in an X-Y direction on the region corresponding to data on a second section b among the section data of the three-dimensional shape data, thereby forming the second section b.

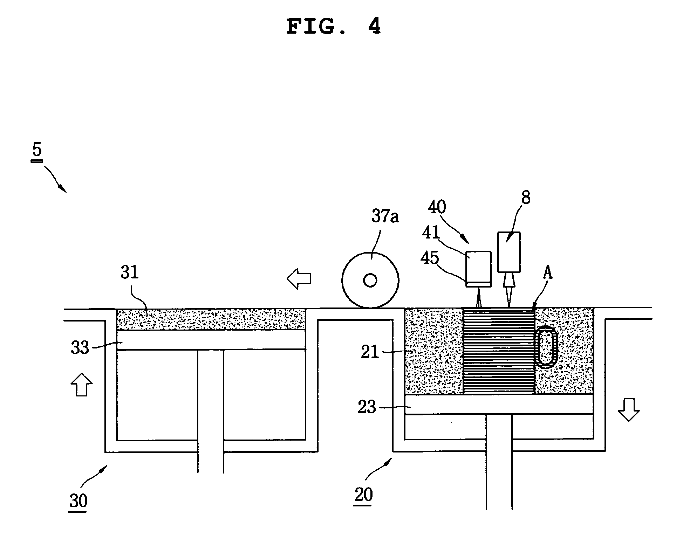

These processes are repeated to successively stack the sections one above another, and consequently, a final section will be stacked. As shown in Fig. 4, therefore, a three-dimensional prototype with its improved solidity can be rapidly made in accordance with the three-dimensional shape data.

As described above, according to a three-dimensional printing prototyping system of the present invention, a period of time required in curing a three-dimensional prototype can be remarkably shortened and the three-dimensional prototype with its superior solidity can be obtained.

## Claims

1. A three-dimensional printing prototyping system including a prototyping chamber having a prototyping table capable of moving up and down by a predetermined range, a material containing chamber containing a powder material and having a material supply table capable of moving up and down by a predetermined range, and a material supplying means for supplying the powder material contained in the material containing chamber to the prototyping table as much as a sectional thickness corresponding to divided section data of a three-dimensional prototype to be prototyped, said system comprising:
a printing head for injecting a photocuring adhesive material to a region, corresponding to the sectional data, on the powder material supplied to the prototyping table;
a curing device for photocuring at least the region on which the adhesive material is injected; and
a control computer for controlling the printing head and the curing device such that the adhesive material is injected and cured, respectively, on the region corresponding to the divided section data of the three-dimensional prototype.

2. The system as claimed in claim 1, wherein the photocuring adhesive material is a mixture of UV resin and liquid binder with low viscosity.

3. The system as claimed in claim 1, wherein:
the control computer controls the powder material to be supplied to the prototyping table as much as a thickness of each section in order of the section data,
the control computer controls an operation of the printing head for injecting the adhesive material and an operation of the curing device such that the adhesive material is injected and cured, respectively, on the powder material in a region corresponding to the section data when the powder material corresponding to the relevant section thickness is supplied to the prototyping table; and
the control computer controls the prototyping table to be lowered by the thickness of the section when the adhesive material has been completely injected and cured on the relevant section.

4. The system as claimed in claim 1 or 3, wherein the curing device is a curing device with a lamp for irradiating ultraviolet rays to a whole or partial area in the prototyping chamber.
